# EUROPEAN PATENT SPECIFICATION

(11) **EP 2 890 187 B1**
(45) Date of publication and mention of the grant of the patent: **06.11.2019**
(21) Application number: 14197095.4
(22) Date of filing: 10.12.2014
(51) Int. Cl.: H04W 48/16, H04W 76/18, H04W 84/12

(54) **Optimization of the searching phase in IEEE802.11 networks after a connection failure**
Optimierung der Suchphase in IEEE802.11-Netzwerken nach einem Verbindungsfehler
Optimisation de la phase de recherche dans des réseaux IEEE802.11 après un échec de connexion

(30) Priority: 27.12.2013 JP 2013273167
(43) Date of publication of application: 01.07.2015
(73) Proprietor: Canon Kabushiki Kaisha, Tokyo 146-8501 (JP)
(72) Inventor: Kawasaki, Hiroki, Tokyo,, Tokyo 146-8501 (JP)
(74) Representative: TBK

(56) References cited:
- EP-A1- 2 150 082
- EP-A2- 2 367 383
- WO-A1-2009/104458
- WO-A1-2011/001682
- WO-A1-2011/001683
- US-A1- 2009 037 591

## Description

### BACKGROUND OF THE INVENTION

### Field of the Invention

The present invention relates to a communication technique.

### Description of the Related Art

In wireless communication such as a wireless LAN that complies with the IEEE802.11 standard series, many setting items need to be set before use. Examples of the setting items include communication parameters that are needed for performing wireless communication, such as a service set identifier (SSID) serving as a network identifier, an encryption method, an encryption key, an authentication method, and an authentication key. It is very complicated to set all of these by manual input of a user. Accordingly, automatic setting methods for easily setting communication parameters for a wireless device are proposed by various manufacturers. In these automatic setting methods, communication parameters are provided from one device to another, and automatically set using procedures and messages that are predetermined between the devices to be connected to each other.

In Wi-Fi Alliance, a method of automatic setting of communication parameters for communication in the wireless LAN infrastructure mode (infrastructure communication) is defined. Japanese Patent Laid-Open No. 2011-15286 discloses an example in which a plurality of methods for automatically setting communication parameters is set for an apparatus. In Japanese Patent Laid-Open No. 2011-15286, the apparatus includes means for detecting a device in which a communication parameter setting process is running, without a user selecting an automatic setting method that is started via a menu screen or the like. By using a result that was detected by this detecting means, it is possible to automatically execute a method for automatically setting communication parameters, improving the ease of use for a user.

In Japanese Patent Laid-Open No. 2011-15286, when a communication apparatus is wirelessly connected to an access point, there are two main phases. The first phase is a phase in which an access point (process-running access point) in which a communication parameter automatic setting process is running is detected, and it is determined which of the plurality of methods for automatically setting communication parameters is running (phase 1). The second phase is a phase in which a communication parameter automatic setting process is executed with respect to the detected access point using the determined method (phase 2).

For example, a case is considered in which an error occurs in phase 2 and connection fails. In the processing disclosed in Japanese Patent Laid-Open No. 2011-15286, when, after the connection failure, the user tries to re-connect to the access point to which he or she has earlier tried to connect, the communication apparatus has to start the process again from phase 1, and detect again a process-running access point. If the user connects to the same access point as the access point to which the user failed to connect, the process starting from the phase 1 will be unnecessary and take time, leading to a deterioration in usability.

Furthermore, there may be a case where a communication environment between an access point and the communication apparatus is bad, and the process of phase 1 takes a lot of time due to a packet loss or the like. In this case, the process-running access point may break the communication parameter setting process during phase 2 due to a time-out. Accordingly, depending on the time period needed for the process of phase 1, the process may fail at phase 2 every time the user tries to connect to the access point, and it may be impossible for the user to complete the connection process.

Document WO 2009/104458 A1 discloses a communication apparatus including receiving means for receiving a communication parameter, which is necessary for communication, from another communication apparatus, storage means for storing the communication parameter, first detecting means for detecting a connection instruction for connection to a network, and connecting means which, if the connection instruction has been detected by the first detecting means, is for executing processing for connecting to the network using a communication parameter already stored in the storage means, or processing for connecting to the network after a communication parameter is received from another communication apparatus by the receiving means, in accordance with the type of communication parameter already stored in the storage means.

Document EP 2 367 383 A2 discloses a first determination section that determines, when an instruction for connection establishment is issued, whether or not connection information including target apparatus specifying information that uniquely specifies a predetermined target apparatus is stored in a first storage section. A first connection section performs, when the first determination section determines that the connection information is stored in the first storage section, a process for establishing a connection by wireless communication to the target apparatus that is specified based on the target apparatus specifying information stored in the first storage section.

### SUMMARY OF THE INVENTION

The present invention provides, in a technical field for automatically executing a communication parameter automatic setting method without a user selecting a communication parameter setting method, a technique for reducing a time period for re-connection even when setting fails before it is completed, improving the ease of use for the user.

The present invention in its first aspect provides a communication apparatus as specified in claims 1 - 4.

The present invention in its second aspect provides a method for controlling a communication apparatus as specified in claim 5.

Further features of the present invention will become apparent from the following description of exemplary embodiments, also sometimes merely referred as "embodiments" below (with reference to the attached drawings).

### BRIEF DESCRIPTION OF THE DRAWINGS

FIG. 1 is a block diagram showing an example of a hardware configuration of a communication apparatus.
FIG. 2 is a block diagram showing an example of a functional configuration of the communication apparatus 101.
FIG. 3 is a diagram illustrating wireless communication between the communication apparatus 101 and an AP.
FIG. 4 is a flowchart of processing performed by the communication apparatus 101.
FIG. 5 is a diagram showing an example of a configuration of a table.
FIG. 6 is a diagram showing a process sequence of the communication apparatus 101 and the AP.
FIG. 7 is a flowchart of the processing of step S413.
FIG. 8 is a diagram showing an example of a GUI display.
FIG. 9 is a diagram showing an example of a screen display.

### DESCRIPTION OF THE EMBODIMENTS

Hereinafter, embodiments of the present invention will be described with reference to the accompanying drawings. Note that the embodiments described below show examples in which the present invention is specifically implemented, that is, specific working examples of configurations described in the Claims.

### First Embodiment

In the present embodiment, a description will be given, taking an example in which a wireless LAN system that complies with the IEEE802.11 standard series is used, but the type of communication is not necessarily limited to the wireless LAN system complying with the IEEE802.11 standard. For example, the present invention may be implemented in another wireless medium, such as a wireless USB, MBOA, Bluetooth (registered trademark), UWB, or ZigBee. Furthermore, the present invention may also be implemented in a wired communication medium such as a wired LAN. In this context, MBOA is an abbreviation of "Multi Band OFDM Alliance". Furthermore, UWB includes a wireless USB, wireless 1394, WINET, and the like.

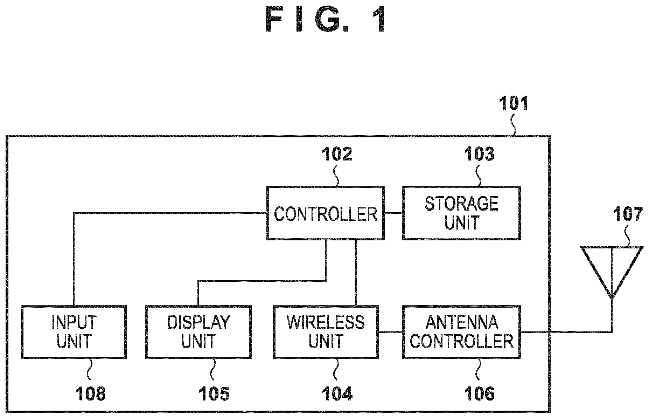

First, an example of a hardware configuration of a communication apparatus of the wireless LAN system according to the present embodiment will be described with reference to the block diagram of FIG. 1. Note that the configuration shown in FIG. 1 is merely an example of a configuration in which processes can be executed that are described below as being executed by the communication apparatus, and any configuration may be employed as long as the same processes can be executed in the configuration.

A controller 102, which is a processor such as a CPU or MPU, executes processing using a computer program and data that are stored in a storage unit 103, thereby controlling overall operations of the communication apparatus 101 and executing the processes that are described below as being executed by the communication apparatus 101. For example, the controller 102 controls automatic setting of parameters (communication parameters) for wireless communication with another apparatus. In the control of automatic setting of communication parameters, the controller 102 can execute an automatic setting process while serving as an access point (hereinafter, abbreviated as "AP") in a wireless LAN infrastructure mode, and an automatic setting process while serving as a station in the wireless LAN infrastructure mode.

The storage unit 103 has stored therein computer programs and data for causing the controller 102 to execute the processes that are described below as being executed by the communication apparatus 101. The storage unit 103 may be a memory such as a ROM or RAM, or a flexible disk, a hard disk, an optical disk, a magneto-optical disk, a CD-ROM, a CD-R, a magnetic tape, a nonvolatile memory card, a DVD, or the like.

An input unit 108 is a user interface that can be operated by a user to input various instructions in the controller 102, and the user can input, for example, a connection request to connect to an AP by operating this input unit 108.

A display unit 105 is constituted by a liquid crystal screen or the like, and can display, in images or characters, a result of the process performed by the controller 102. Furthermore, the display unit 105 may also have, in addition to the display function, a sound output function. Furthermore, the display unit 105 may also output visually recognizable information, as with a LCD or LED. Furthermore, the display unit 105 may also be a touch panel screen, and in this case, this display unit 105 can display various types of information and detect touch operations by a user.

A wireless unit 104 controls wireless communication with an AP using an antenna 107 and an antenna controller 106. The antenna controller 106 controls the antenna 107.

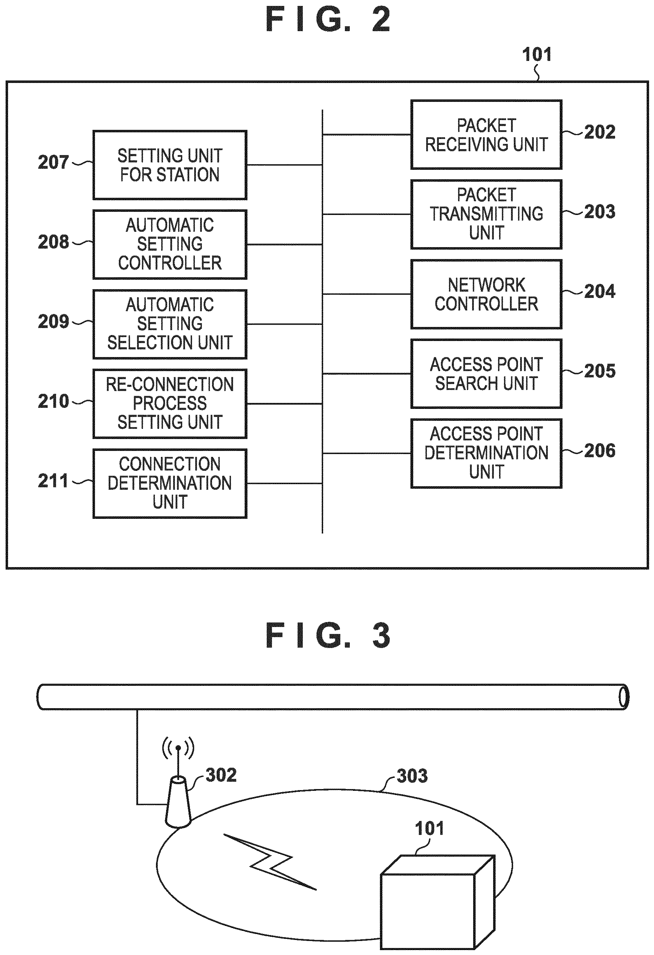

Hereinafter, an example of a functional configuration of the communication apparatus 101 will be described with reference to the block diagram of FIG. 2. Each functional unit shown in FIG. 2 is realized by an operation of one of the controller 102, the wireless unit 104, and the antenna controller 106, and corresponds to one of the controller 102, the wireless unit 104, and the antenna controller 106, or a combination thereof.

Furthermore, each functional unit shown in FIG. 2 may also be implemented as a computer program, and in this case, the computer program will be stored in the storage unit 103. By executing the computer program, the controller 102 can execute a process, or can control the wireless unit 104 or the antenna controller 106 so as to cause it to execute the process, and thus the function of the corresponding functional unit is realized.

A packet receiving unit 202 receives a packet or a beacon (annunciation signal) that is transmitted from an AP via wireless communication. The packet receiving unit 202 also receives a device search signal such as a probe request that is transmitted from an AP via wireless communication. The probe request can also be referred to as a network search signal for searching for a desired network. The packet receiving unit 202 also receives a probe response, which is a response signal in response to a probe request transmitted from the present apparatus to an AP.

A packet transmitting unit 203 transmits a packet or beacon, and a probe request to an AP via wireless communication. Furthermore, the packet transmitting unit 203 transmits a probe response, which is a response signal in response to a probe request transmitted from an AP via wireless communication.

In the present embodiment, when a device search signal or a response signal is transmitted from an apparatus A, self-information is added to that signal. The self-information in this case includes an SSID of a network to which the apparatus A belongs, information indicating whether or not a communication parameter automatic setting process is running in the apparatus A, and information indicating, if the process is running, the method of the automatic setting process (automatic setting method). As described above, the self-information added to a device search signal or a response signal that is transmitted from the apparatus A includes such information on the apparatus A.

A network controller 204 controls network connection to an AP (process for connecting to a wireless LAN network).

An access point search unit 205 lets the packet transmitting unit 203 transmit a probe request and lets the packet receiving unit 202 receive probe responses, which are response signals in response to this probe request, and searches for APs that are present in the vicinity of the communication apparatus 101. Note that a method for searching for APs that are present in the vicinity of the communication apparatus 101 is not limited to this, and a configuration is also possible in which, by letting the packet receiving unit 202 receive beacons, the access point search unit 205 searches for APs that are present in the vicinity of the communication apparatus 101.

An access point determination unit 206 specifies, among the APs found by the access point search unit 205, an AP in which a communication parameter automatic setting process for infrastructure communication is running. Examples of the communication parameter automatic setting process for infrastructure communication include an industry-standard process, such as "Wi-Fi Protected Setup", and a process provided by the individual manufacturer. Note that the access point determination unit 206 may also be configured to detect a station in which a communication parameter automatic setting process for infrastructure communication is running.

A setting unit 207 for a station (for STA) receives, as a station, communication parameters for infrastructure communication from the AP. The setting unit 207 for the station executes, as a station, a predetermined setting process protocol with respect to the AP, and receives communication parameters that are needed for performing wireless communication, such as an SSID serving as a network identifier, an encryption method, an encryption key, an authentication method, and an authentication key.

If a user operates the input unit 108 to input a connection request to connect to an AP, an automatic setting controller 208 detects the connection request and then controls a communication parameter setting process in accordance with an automatic setting method that was selected by an automatic setting selection unit 209.

The automatic setting selection unit 209 references, as a station, information indicating an automatic setting method included in the self-information of the probe response received by the packet receiving unit 202 from the AP specified by the access point determination unit 206. Then, the automatic setting selection unit 209 selects the automatic setting method that is indicated by the referenced information.

A connection determination unit 211 determines whether or not the process for connecting to the AP using the communication parameters received by the setting unit 207 for station is successful, and, if it is determined that the connection process fails, the connection determination unit 211 determines a factor (error content) of the failure.

A re-connection process setting unit 210 sets, upon receiving again a connection request (re-connection request) to connect to an AP from the user via the input unit 108 after the determination by the connection determination unit 211, a process start position at which the communication apparatus 101 starts the process, based on the failure factor determined by the connection determination unit 211.

Hereinafter, wireless communication between the communication apparatus 101 and an AP will be described with reference to FIG. 3. For ease of illustration, FIG. 3 shows a wireless LAN system including one AP (AP 302) and one communication apparatus 101. In response to an instruction of a user, the AP 302 executes a communication parameter automatic setting process for infrastructure communication to perform wireless communication on a network 303, and thereby provides communication parameters to the communication apparatus 101. In infrastructure communication, the communication apparatus 101 operates as a station (slave station) for the AP 302 and performs wireless communication via the AP 302. The AP 302 may also be referred to as a base station, a master station, a control apparatus (station), or the like, and is configured to construct an infrastructure network and perform control so as to enable the apparatus that serves as a station (slave station) to perform communication.

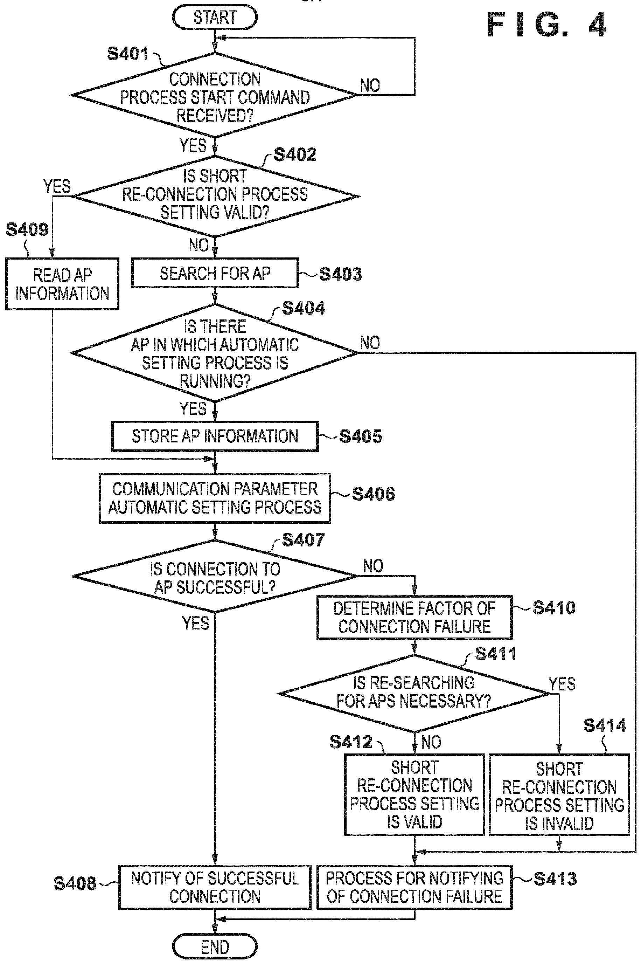

Next, processing performed by the communication apparatus 101 will be described with reference to the flowchart of FIG. 4. In step S401, the automatic setting controller 208 determines whether or not a user has input a connection request to connect to an AP (connection process start command) by operating the input unit 108. As a result of the determination, if a user has input a connection request (if an input of a connection process start command has been detected), the procedure advances to step S402, whereas if a user has not input a connection request (if an input of a connection process start command has not been detected), the process waits for in step S401.

In step S402, the automatic setting controller 208 references a short re-connection process setting value (flag value) that is stored in the storage unit 103, and determines whether or not the referenced value indicates "valid". As a result of the determination, if the referred value indicates "valid", the procedure advances to step S409, whereas if the referenced value indicates "invalid", the procedure advances to step S403. Note that the default of the short re-connection process setting value indicates "invalid".

In step S403, the automatic setting controller 208 first activates the access point search unit 205. The access point search unit 205 lets the packet transmitting unit 203 transmit a probe request, and lets the packet receiving unit 202 receive probe responses, which are response signals in response to the probe request. It is also possible that the access point search unit 205 lets the packet receiving unit 202 receive beacon signals. With this, the access point search unit 205 searches for APs that are present in the vicinity of the communication apparatus 101.

In step S404, the access point determination unit 206 references pieces of self-information that are respectively added to the probe responses or beacons that were received by the packet receiving unit 202 in step S403. Then, the access point determination unit 206 determines whether or not there is the self-information that includes information indicating that "a communication parameter automatic setting process is running", among the pieces of referenced self-information.

As a result of the determination, if there is self-information that includes information indicating that "a communication parameter automatic setting process is running", that is, there is an AP in which a communication parameter automatic setting process for infrastructure communication is running, the procedure advances to step S405.

On the other hand, if there is not self-information that includes information indicating that "a communication parameter automatic setting process is running", that is, there is no AP in which a communication parameter automatic setting process for infrastructure communication is running, the procedure advances to step S413.

In step S405, the access point determination unit 206 stores, in the storage unit 103, the self-information (the self-information that includes information indicating that "a communication parameter automatic setting process is running") found in step S404.

In step S406, the automatic setting selection unit 209 references "information on an automatic setting method" included in the self-information that is stored in the storage unit 103 in step S405, and selects the automatic setting method indicated by the information. Then, the automatic setting controller 208 controls a communication parameter setting process in accordance with the automatic setting method selected by the automatic setting selection unit 209, and thereby the setting unit 207 for the station receives communication parameters from the AP. Then, the automatic setting controller 208 controls the network controller 204, and starts, as a station, a process for connecting to the AP using the received communication parameters.

In step S407, the connection determination unit 211 determines whether or not the connection process started in step S406 is successful. As a result of the determination, if the connection process is successful, the procedure advances to step S408, whereas if the connection process fails, the procedure advances to step S410.

In step S408, the network controller 204 participates an infrastructure network that is constructed by the successfully connected AP and performs communication, and the automatic setting controller 208 displays, on the display unit 105, the fact that connection to the AP is successful. The method for notifying of the successful connection is not limited to this, and the successful connection may also be notified using sound or a flashing pattern of an LED or the like.

On the other hand, in step S410, the connection determination unit 211 determines a factor of the failure of the connection process started in step S406. Since this determination process is well known, a description regarding the technique is omitted.

In step S411, the re-connection process setting unit 210 determines, upon receiving again a connection request to connect to an AP from the user via the input unit 108, whether to start the process from searching for APs that are present in the vicinity of the communication apparatus 101 or from the communication parameter automatic setting process, based on the factor determined in step S410.

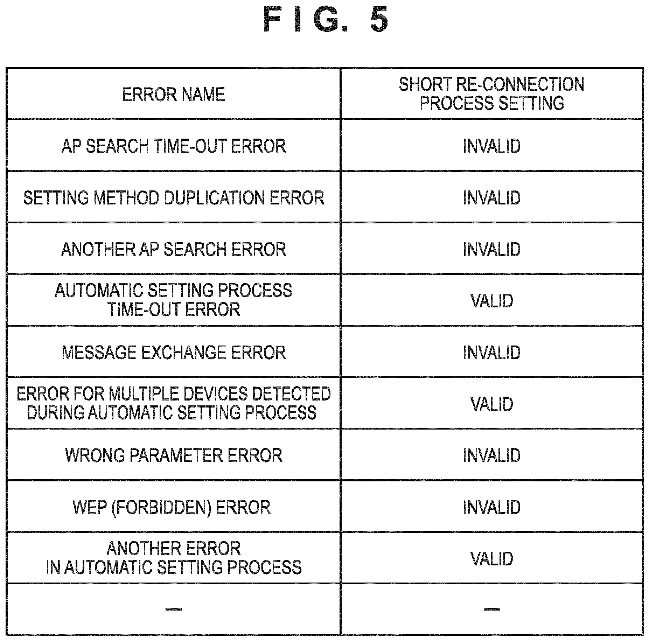

At that time, the re-connection process setting unit 210 references, for example, the table exemplified in FIG. 5. The table of FIG. 5 is a table in which a short re-connection process setting value ("valid" or "invalid") is registered for each factor of failure (error name) of the connection process, the table having been generated in advance and being stored in the storage unit 103. Of course, this table may be read at any time and edited by a user operating the input unit 108.

When this table is referenced, the factor of failure of the connection process "AP search time-out error", for example, has the short re-connection process setting value of "invalid", and thus the re-connection process setting unit 210 sets the current short re-connection process setting value to "invalid". Accordingly, by referencing such a table, the re-connection process setting unit 210 can set the short re-connection process setting value to a value that corresponds to the factor of failure of the connection process.

If, for example, the factor of the connection failure is determined to be an "automatic setting process time-out error", it is conceivable that the automatic setting process has been timed out at the access point before the automatic setting controller 208 executes the automatic setting process using the automatic setting method selected by the automatic setting selection unit 209. Therefore, when re-connection is tried, the process after the determination of an automatic setting method onward can be performed, that is, the short re-connection process can be made valid. On the other hand, in case of a parameter error or an error for an unknown reason, it is conceivable that stored self-information of the access point is erroneous. In this case, even if an automatic connection process is performed again using the same self-information, the automatic connection process is likely to result in a failure, and thus the short re-connection process is considered not to be made valid. Note that information registered in this table is merely an example, and the present invention is not limited to the error contents, or handling when the short re-connection process is to be made valid or invalid.

Returning to FIG. 4, as a result of the determination in step S411, if the short re-connection process setting value that corresponds to the factor determined in step S410 indicates "invalid", the procedure advances to step S414. On the other hand, if the short re-connection process setting value that corresponds to the factor determined in step S410 indicates "valid", the procedure advances to step S412.

In step S412, the re-connection process setting unit 210 sets the short re-connection process setting value that is stored in the storage unit 103 to "valid". On the other hand, in step S414, the re-connection process setting unit 210 sets the short re-connection process setting value that is stored in the storage unit 103 to "invalid".

In step S413, the automatic setting controller 208 displays, on the display unit 105, the fact that connection to an AP fails. The method for notifying of the connection failure is not limited to this, and the connection failure may also be notified using sound or a flashing pattern of an LED or the like.

The next time when a connection request to connect to the AP is received again from a user via the input unit 108, if, in step S402, the short re-connection process setting value stored in the storage unit 103 indicates "valid", the procedure advances to step S409.

In step S409, the automatic setting controller 208 reads self-information that is stored most recently in the storage unit 103, or self-information of the AP that is the target of the last connection process (that is, self-information of the most recently found AP) from the storage unit 103, and supplies the read self-information to the automatic setting selection unit 209. When the procedure advances from step S409 to step S406, the automatic setting selection unit 209 references, in step S406, "information on an automatic setting method" included in the self-information that was supplied from the automatic setting controller 208 in step S409, and selects the automatic setting method that is indicated by that information. Then, the automatic setting controller 208 controls a communication parameter setting process in accordance with the automatic setting method selected by the automatic setting selection unit 209, and thereby the setting unit 207 for the station receives communication parameters from the AP. Then, the automatic setting controller 208 controls the network controller 204, and starts, as a station, a process for connecting to the AP, using the received communication parameters.

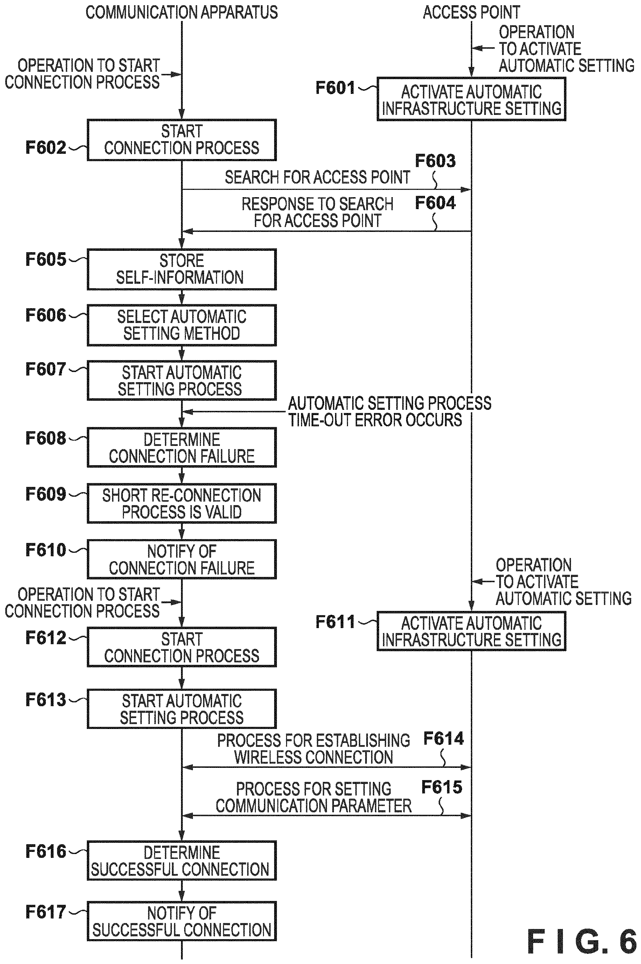

The following will describe, with reference to FIG. 6, a process sequence in which an automatic setting process is started at an AP, then the connection process is started at the communication apparatus 101, a communication parameter automatic setting process is executed between the communication apparatus 101 and the AP, then an error occurs and re-connection is performed.

When a setting button (not shown) of the AP is pressed down, the AP starts a communication parameter automatic setting process for infrastructure communication (F601). After the start of the communication parameter automatic setting process for infrastructure communication, the AP adds, to a beacon or probe response, self-information that includes information indicating that the AP itself in which the automatic setting process is running, and transmits the beacon or probe response.

After an operation to start a connection process on the communication apparatus 101 side is performed, the communication apparatus 101 starts the procedure according to the flowchart of FIG. 4 (F602). The communication apparatus 101 transmits a device search signal (probe request) for searching for APs, and checks whether or not there is an AP in which an automatic setting process is running in the vicinity (F603). Here, the AP transmits, to the communication apparatus 101, a response signal (probe response) to which self-information is added, the self-information including information indicating that the AP itself in which an automatic setting process is running (F604).

Upon receiving the probe response from the AP in which the communication parameter automatic setting process is running, the communication apparatus 101 stores the self-information added to the probe response (F605). Then, the communication apparatus 101 selects an automatic setting method from the stored self-information (F606), and starts a communication parameter automatic setting process in accordance with the selected automatic setting method (F607). Then, the communication apparatus 101 determines that the connection fails due to an automatic setting process time-out error (F608). In this case, the communication apparatus 101 sets the value for a short re-connection process to "valid" based on the factor of connection failure (F609). Then, the communication apparatus 101 notifies the user of the connection failure (F610).

When the user presses down the setting button (not shown) of the AP again in order to try a re-connection process, the AP starts the communication parameter automatic setting process for infrastructure communication (F611).

After an operation to start a connection process on the communication apparatus 101 side is performed, the communication apparatus 101 starts the procedure according to the flowchart of FIG. 4 (F612). Here, since, in F609, the value for the short re-connection process indicates "valid", the communication apparatus 101 does not execute a process for searching for APs. The communication apparatus 101 starts a communication parameter automatic setting process based on the information (automatic setting method of the AP to which the user has tried to connect last time) included in the self-information stored in the storage unit 103 (F613).

Then, the communication apparatus 101 executes a wireless connection establishment process in order to perform association for temporal wireless connection to the AP using an SSID included in the self-information stored in the storage unit 103 (F614). Note that, at the stage in which association is completed, normal data communication using encryption or authentication cannot be performed since the SSID matches each other but an encryption key or the like does not match each other.

As a result, the communication apparatus 101 obtains communication parameters from the AP (F615). After having obtained the communication parameters, the communication apparatus 101 determines that connection is successful (F616) and notifies the user of the successful connection (F617).

Accordingly, the communication apparatus 101 detects, among APs in the vicinity, an AP in which an automatic setting process is running, and executes a process for automatically setting appropriate communication parameters in accordance with the same method as that in the AP, and if connection fails, it is possible to shorten the re-connection process using an appropriate method.

### Second Embodiment

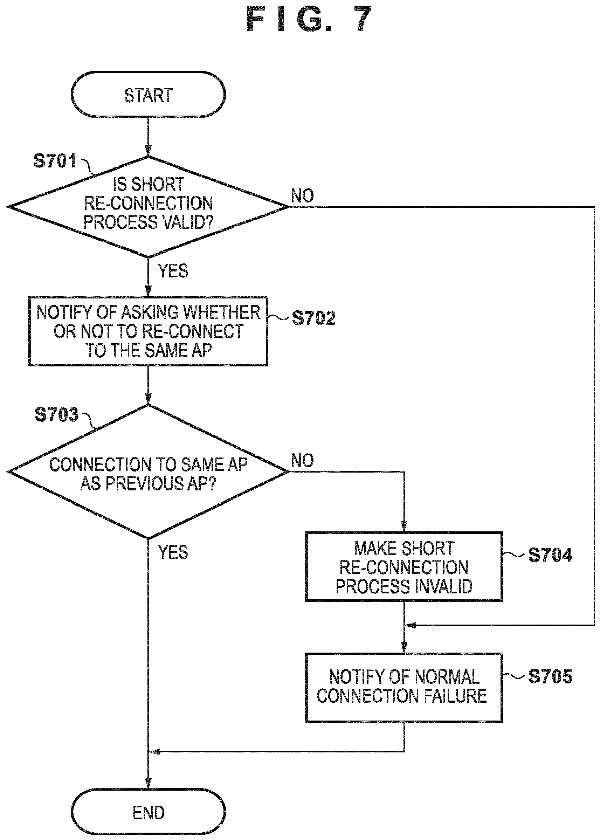

In the first embodiment, if the value for the short re-connection process indicates "valid", a process for searching again for APs is not performed. In the present embodiment, if the value for the short re-connection process indicates "valid", a user will determine whether or not to execute a process for searching again for APs, instead of the process being determined not to be executed without exception. In this case, in step S413, the procedure according to the flowchart of FIG. 7 will be performed.

In step S701, the automatic setting controller 208 references the short re-connection process setting value (flag value) that is stored in the storage unit 103, and determines whether or not the referenced value indicates "valid". As a result of the determination, if the referenced value indicates "valid", the procedure advances to step S702, whereas if the referenced value indicates "invalid", the procedure advances to step S705.

In step S702, the automatic setting controller 208 lets the display unit 105 display a graphical user interface (GUI) for causing a user to select whether or not to re-connect to the most recently found AP. If the user inputs, using the input unit 108, an instruction to re-connect to the most recently found AP, the procedure according to the flowchart of FIG. 7 ends. On the other hand, if the user inputs, using the input unit 108, an instruction not to re-connect to the most recently found AP, the procedure advances to step S704 via step S703.

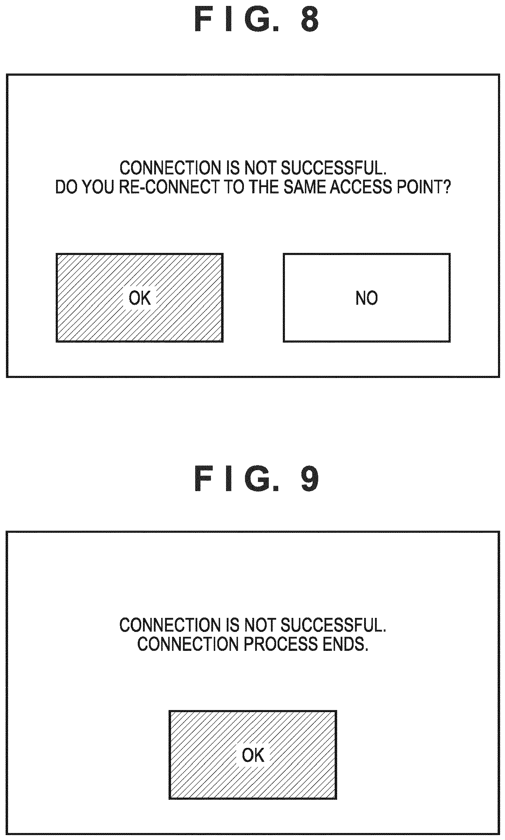

For example, in step S702, the GUI exemplified in FIG. 8 is displayed by the display unit 105. Then, if the user operates the input unit 108 to instruct "OK", the procedure according to the flowchart of FIG. 7 ends, whereas if the user instructs "NO", the procedure advances to step S704 via step S703.

In step S704, the re-connection process setting unit 210 sets the short re-connection process setting value that is stored in the storage unit 103 to "invalid". Then, in step S705, the automatic setting controller 208 displays, on the display unit 105, the fact that connection to the AP fails. In step S705, a screen as shown in, for example, FIG. 9 is displayed on the display unit 105 (in the first embodiment, this screen may also be displayed on the display unit 105 in step S413). Note that, also in the present embodiment, the method for notifying of the connection failure is not limited to this, and the connection failure may also be notified using sound or a flashing pattern of an LED or the like.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The corresponding extend of protection is defined by the appended claims .

In response to a connection request, an access point in which a setting process for setting a parameter for wireless communication is running is searched for, and the parameter is set in accordance with a method of the setting process. When a connection process for connecting to the AP fails after the setting, either a first process in which the searching is performed and then the setting is performed, or a second process in which the setting is performed in accordance with the method of the setting process that is running at the most recently found AP is set depending on a factor of the failure. The set process is executed upon receiving a re-connection request.

## Claims

1. A communication apparatus (101) configured to execute a wireless communication complying with IEEE802.11 standard, the communication apparatus comprising:
process means (102) configured to search, in response to a connection request by a user, for an access point (302) in which an automatic setting process for setting a parameter for wireless communication is running, and to set the parameter in accordance with a method of the setting process;
**characterized by**
setting means (102) configured to, when a connection process for connecting to the access point fails after the setting,
set a value of a flag to valid or invalid based on an error content of the failure in the connection process corresponding to information on the error content registered in advance in a storage unit (103) comprised in the communication apparatus (101), and
select either a first process, if it is determined that the flag is set to invalid, in which the searching is performed and then the setting is performed, or a second process, if it is determined that the flag is set to valid, in which the searching is not performed and the setting is performed in accordance with the method of the setting process that is running at the access point to which the connection process failed,
wherein the process means (102) is configured to execute the process that is selected by the setting means upon receiving a re-connection request by the user.

2. The communication apparatus (101) according to claim 1,
**characterized in that** when the setting means (102) has selected the first process, the process means (102) is configured to transmit a probe request according to a connection request, and, upon receiving probe responses, which are response signals in response to the probe request, to search for, among the received probe responses, a probe response to which information is added, the information indicating that a setting process for setting a parameter for wireless communication is running, and the process means is configured to perform the setting in accordance with a method that is indicated by the information added to the found probe response.

3. The communication apparatus (101) according to claim 1,
**characterized in that** if the setting means (102) has selected the second process, the process means (102) is configured to perform the setting in accordance with a method that is indicated by the information added to the probe response from the access point to which the connection process failed.

4. The communication apparatus (101) according to claim 1, further comprising:
means configured to display, if the setting means (102) has selected the second process, a screen for causing a user to select whether or not the process means (102) is to execute the second process upon receiving a re-connection request,
**characterized in that** when it is detected that the user has selected that the process means is to execute the second process, the process means is configured to execute the second process upon receiving a re-connection request.

5. A method for controlling a communication apparatus (101) configured to execute a wireless communication complying with IEEE802.11 standard, the method comprising:
a processing step of searching, in response to a connection request by a user, for an access point (302) in which an automatic setting process for setting a parameter for wireless communication is running, and setting the parameter in accordance with a method of the setting process; **characterized by**
a setting step of, when a connection process for connecting to the access point fails after the setting,
setting (S412, S414) a value of a flag to valid or invalid based on an error content of the failure in the connection process corresponding to information on the error content registered in advance in a storage unit (103) comprised in the communication apparatus (101), and
selecting (S402) either a first process, if it is determined that the flag is set to invalid, in which the searching is performed and then the setting is performed, or a second process, if it is determined that the flag is set to valid, in which the searching is not performed and the setting is performed in accordance with the method of the setting process that is running at the access point to which the connection process failed,
wherein, in the processing step, the process that is selected in the setting step is executed upon receiving a re-connection request by the user.

## Patentansprüche

1. Kommunikationsvorrichtung (101), die dazu konfiguriert ist, eine drahtlose Kommunikation auszuführen, die mit dem IEEE802.11-Standard konform ist, wobei die Kommunikationsvorrichtung aufweist:
eine Prozesseinrichtung (102), die dazu konfiguriert ist, als Reaktion auf eine Verbindungsanfrage durch einen Benutzer, nach einem Zugangspunkt (302) zu suchen, in dem ein Automatikeinstellprozess zum Einstellen eines Parameters für eine drahtlose Kommunikation abläuft, und den Parameter gemäß einem Verfahren des Einstellprozesses einzustellen;
**gekennzeichnet durch**
eine Einstelleinrichtung (102), die dazu konfiguriert ist, wenn ein Verbindungsprozess zum Verbinden mit dem Zugangspunkt nach der Einstellung fehlschlägt,
einen Wert eines Markers auf gültig oder ungültig zu setzen, basierend auf einem Fehlerinhalt des Fehlers in dem Kommunikationsprozess entsprechend den Informationen bezüglich des Fehlerinhalts, die im Voraus in einer Speichereinheit (103), die in der Kommunikationsvorrichtung (101) umfasst ist, registriert sind, und
entweder einen ersten Prozess, wenn bestimmt ist, dass der Marker auf ungültig eingestellt ist, in dem das Suchen durchgeführt wird und dann das Einstellen durchgeführt wird, oder einen zweiten Prozess auszuwählen, wenn bestimmt ist, dass der Marker auf gültig eingestellt ist, in dem das Suchen nicht durchgeführt wird und das Einstellen gemäß dem Verfahren des Einstellprozesses, der an dem Zugangspunkt, zu dem der Verbindungsprozess fehlgeschlagen ist, abläuft, durchgeführt wird,
wobei die Prozesseinrichtung (102) dazu konfiguriert ist, den Prozess, der durch die Einstelleinrichtung ausgewählt ist, nach einem Empfangen einer Wiederverbindungsanfrage durch den Benutzer auszuführen.

2. Kommunikationsvorrichtung (101) gemäß Anspruch 1,
**dadurch gekennzeichnet, dass**, wenn die Einstelleinrichtung (102) den ersten Prozess ausgewählt hat, die Prozesseinrichtung (102) dazu konfiguriert ist, eine Testanfrage gemäß einer Verbindungsanfrage zu übertragen, und, nach einem Empfangen von Testantworten, welche Antwortsignale als Reaktion auf die Testanfrage sind, unter den empfangenen Testantworten nach einer Testantwort zu suchen, zu der Informationen hinzugefügt sind, wobei die Informationen angeben, dass ein Einstellprozess zum Einstellen eines Parameters für eine drahtlose Kommunikation abläuft, und die Prozesseinrichtung dazu konfiguriert ist, die Einstellung gemäß einem Verfahren durchzuführen, das durch die Informationen angegeben ist, die zu der gefundenen Testantwort hinzugefügt sind.

3. Kommunikationsvorrichtung (101) gemäß Anspruch 1,
**dadurch gekennzeichnet, dass**, wenn die Einstelleinrichtung (102) den zweiten Prozess ausgewählt hat, die Prozesseinrichtung (102) dazu konfiguriert ist, die Einstellung gemäß einem Verfahren durchzuführen, das durch die Informationen angegeben ist, die zu der Testantwort von dem Zugangspunkt hinzugefügt ist, zu dem der Verbindungsprozess fehlgeschlagen ist.

4. Kommunikationsvorrichtung (101) gemäß Anspruch 1, weiterhin mit:
einer Einrichtung, die dazu konfiguriert ist, wenn die Einstelleinrichtung (102) den zweiten Prozess ausgewählt hat, einen Bildschirm anzuzeigen, um einen Benutzer zu veranlassen, auszuwählen, ob die Prozesseinrichtung (102) nach einem Empfangen einer Wiederverbindungsanfrage den zweiten Prozess ausführen soll oder nicht,
**dadurch gekennzeichnet, dass**, wenn bestimmt ist, dass der Benutzer ausgewählt hat, dass die Prozesseinrichtung den zweiten Prozess ausführen soll, die Prozesseinrichtung dazu konfiguriert ist, den zweiten Prozess nach einem Empfangen einer Wiederverbindungsanfrage auszuführen.

5. Verfahren zum Steuern einer Kommunikationsvorrichtung (101), die dazu konfiguriert ist, eine drahtlose Kommunikation auszuführen, die mit dem IEEE802.11-Standard konform ist, wobei das Verfahren aufweist:
einen Verarbeitungsschritt des Suchens, als Reaktion auf eine Verbindungsanfrage durch einen Benutzer, nach einem Zugangspunkt (302), in dem ein Automatikeinstellprozess zum Einstellen eines Parameters für eine drahtlose Verbindung abläuft, und Einstellen des Parameters gemäß einem Verfahren des Einstellprozesses; **gekennzeichnet durch**
einen Einstellschritt, wenn ein Verbindungsprozess zum Verbinden mit dem Zugangspunkt nach der Einstellung fehlschlägt,
des Einstellens (S412, S414) eines Werts eines Markers auf gültig oder ungültig basierend auf einem Fehlerinhalt des Fehlers in dem Verbindungsprozess entsprechend Informationen bezüglich des Fehlerinhalts, die im Voraus in einer Speichereinheit (103), der in der Kommunikationsvorrichtung (101) umfasst ist, registriert sind, und
des Auswählens (S402) von entweder einem ersten Prozess, wenn bestimmt ist, dass der Marker auf ungültig eingestellt ist, in dem das Suchen durchgeführt wird und dann das Einstellen durchgeführt wird, oder eines zweiten Prozesses, wenn bestimmt ist, dass der Marker auf gültig eingestellt ist, in dem das Suchen nicht durchgeführt wird und das Einstellen gemäß dem Verfahren des Einstellprozesses, der an dem Zugangspunkt abläuft, zu dem der Verbindungsprozess fehlgeschlagen ist, durchgeführt wird,
wobei in dem Verarbeitungsschritt der Prozess, der in dem Einstellschritt ausgewählt ist, nach einem Empfangen einer Wiederverbindungsanfrage durch den Benutzer ausgeführt wird.

## Revendications

1. Appareil de communication (101) configuré pour exécuter une communication sans fil conforme à la norme IEEE802.11, l'appareil de communication comprenant :
un moyen de traitement (102) configuré pour rechercher, en réponse à une demande de connexion effectuée par un utilisateur, un point d'accès (302) dans lequel un processus de définition automatique permettant de définir un paramètre à des fins de communication sans fil est en cours d'exécution, et pour définir le paramètre conformément à un procédé du processus de définition ;
**caractérisé par**
un moyen de définition (102) configuré, lorsqu'un processus de connexion permettant une connexion au point d'accès échoue après la définition, pour
définir une valeur d'un drapeau sur valide ou sur invalide sur la base d'un contenu d'erreur de l'échec du processus de connexion correspondant à des informations concernant le contenu d'erreur enregistrées à l'avance dans une unité de mémorisation (103) comprise dans l'appareil de communication (101), et
sélectionner soit un premier processus, s'il est déterminé que le drapeau est défini sur invalide, dans lequel la recherche est exécutée et la définition est exécutée par la suite, soit un second processus, s'il est déterminé que le drapeau est défini sur valide, dans lequel la recherche n'est pas exécutée et la définition est exécutée conformément au procédé du processus de définition qui est exécuté au niveau du point d'accès pour lequel le processus de connexion a échoué,
dans lequel le moyen de traitement (102) est configuré pour exécuter le processus qui est sélectionné par le moyen de définition lors de la réception d'une demande de reconnexion effectuée par l'utilisateur.

2. Appareil de communication (101) selon la revendication 1,
**caractérisé en ce que**, lorsque le moyen de définition (102) a sélectionné le premier processus, le moyen de traitement (102) est configuré pour transmettre une demande de sondage conformément à une demande de connexion et, lors de la réception de réponses de sondage, qui sont des signaux de réponse en réponse à la demande de sondage, pour rechercher, parmi les réponses de sondage reçues, une réponse de sondage à laquelle sont ajoutées des informations, les informations indiquant qu'un processus de définition permettant de définir un paramètre de communication sans fil est en cours d'exécution, et le moyen de traitement est configuré pour exécuter la définition conformément à un procédé qui est indiqué par les informations ajoutées à la réponse de sondage trouvée.

3. Appareil de communication (101) selon la revendication 1,
**caractérisé en ce que**, si le moyen de définition (102) a sélectionné le second processus, le moyen de traitement (102) est configuré pour exécuter la définition conformément à un procédé qui est indiqué par les informations ajoutées à la réponse de sondage provenant du point d'accès pour lequel le processus de connexion a échoué.

4. Appareil de communication (101) selon la revendication 1, comprenant en outre :
un moyen configuré pour afficher, si le moyen de définition (102) a sélectionné le second processus, un écran destiné à amener un utilisateur à sélectionner si le moyen de traitement (102) doit, ou non, exécuter le second processus lors d'une réception d'une demande de reconnexion,
**caractérisé en ce que**, lorsqu'il est détecté que l'utilisateur a sélectionné le fait que le moyen de traitement doit exécuter le second processus, le moyen de traitement est configuré pour exécuter le second processus lors d'une réception d'une demande de reconnexion.

5. Procédé de commande d'un appareil de communication (101) configuré pour exécuter une communication sans fil conforme à la norme IEEE802.11, le procédé comprenant :
une étape de traitement consistant à rechercher, en réponse à une demande de connexion effectuée par un utilisateur, un point d'accès (302) dans lequel un processus de définition automatique permettant de définir un paramètre de communication sans fil est en cours d'exécution, et à définir le paramètre conformément à un procédé du processus de définition ; **caractérisé par**
une étape de définition consistant, lorsqu'un processus de connexion permettant une connexion au point d'accès échoue après la définition, à
définir (S412, S414) une valeur d'un drapeau sur valide ou sur invalide sur la base d'un contenu d'erreur de l'échec du processus de connexion correspondant à des informations concernant le contenu d'erreur enregistrées à l'avance dans une unité de mémorisation (103) comprise dans l'appareil de communication (101), et
sélectionner (S402) soit un premier processus, s'il est déterminé que le drapeau est défini sur invalide, dans lequel la recherche est exécutée et la définition est exécutée par la suite, soit un second processus, s'il est déterminé que le drapeau est défini sur valide, dans lequel la recherche n'est pas exécutée et la définition est exécutée conformément au procédé du processus de définition qui est en cours d'exécution au niveau du point d'accès pour lequel le processus de connexion a échoué,
dans lequel, à l'étape de traitement, le processus qui est sélectionné à l'étape de définition est exécuté lors d'une réception d'une demande de reconnexion effectuée par l'utilisateur.
